# FASCICULE DE BREVET EUROPEEN

(11) **EP 0 392 420 B1**
(45) Date de publication et mention de la délivrance du brevet: **26.10.1994**
(21) Numéro de dépôt: 90106751.2
(22) Date de dépôt: 09.04.1990
(51) Int. Cl.: H02M 3/337, H02M 3/315

(54) **Convertisseur continu-continu, à découpage**
Gleichstromschaltwandler
DC-DC switching converter

(30) Priorité: 12.04.1989 FR 8904818
(43) Date de publication de la demande: 17.10.1990
(73) Titulaire: ALCATEL CONVERTERS, F-75008 Paris (FR)
(72) Inventeur: Diallo, Almadidi, F-91120 Palaiseau (FR)
(74) Mandataire: Weinmiller, Jürgen, Dipl.-Ing.

(56) Documents cités:
- EP-A- 0 293 874
- US-A- 4 280 174
- IEEE TRANSACTIONS ON MAGNETICS. vol. 6, no. 1, 01 mars 1970, NEW YORK US pages 10 - 15; P.W. CLARKE: "Self-commutated thyristor DC-DC converter"

## Description

La présente invention concerne un convertisseur d'énergie électrique, et plus particulièrement un convertisseur du type continu-continu, à découpage.

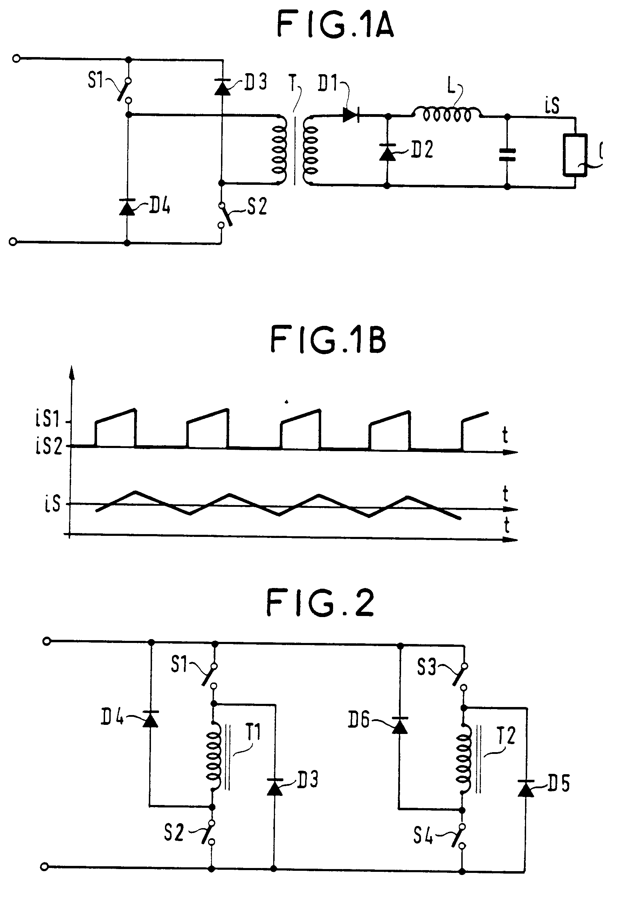

Un exemple connu de convertisseur continu-continu à découpage et les principales formes d'onde associées, sont rappelés respectivement sur les figures 1a et 1b. Ce convertisseur comporte un transformateur T assurant un isolement galvanique entre une partie dite primaire à laquelle est raccordé une source de tension continue d'alimentation et une partie dite secondaire à laquelle est raccordée une charge C. Deux commutateurs à transistors S1 et S2 localisés dans la partie primaire sont commandés en phase, une diode D1 localisée dans la partie secondaire assurant un transfert d'énergie à la charge lorsque ces commutateurs sont conducteurs, et une diode D2 localisée également dans la partie secondaire assurant la continuité du courant dans la charge à travers une inductance de lissage L lorsque ces commutateurs sont bloqués, deux diodes D3 et D4 étant par ailleurs prévues au primaire afin de protéger les commutateurs contre des surtensions.

Un autre exemple de convertisseur à découpage, dit à double alternance, et utilisant deux transformateurs est rappelé sur la figure 2, seule la partie primaire du montage étant représentée. Ce convertisseur permet de reproduire sur une deuxième alternance le fonctionnement rappelé ci-dessus pour une première alternance, grâce à un deuxième module S3- S4- T2- D5- D6 identique au précédent S1- S2- T1- D3- D4.

La présente invention a pour objectif un convertisseur continu-continu à découpage et à double alternance permettant d'éviter un certain nombre d'inconvénients présentés par le montage de la figure 2, et consistant principalement en un nombre élevé de commutateurs et de diodes et en une commutation abrupte de ces composants, elle-même génératrice de perturbations radiolectriques et limitant par ailleurs, du fait des pertes de commutation, une montée en fréquence qui permettrait de réduire le volume de l'inductance de lissage et des transformateurs.

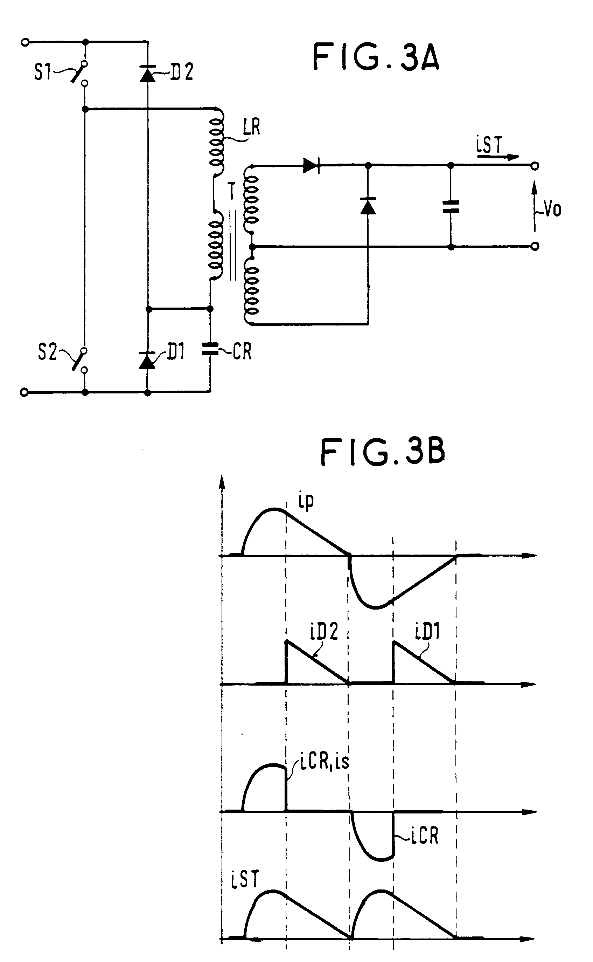

Par le document Unitrode Applications Handbook 1987-1988 (pages 334-337) il est par ailleurs connu d'utiliser le phénomène de résonance dans un convertisseur à découpage à double alternance et à un seul enroulement primaire, en vue d'obtenir une réduction des pertes de commutation. Un tel convertisseur et les formes d'ondes associées sont représentés respectivement sur les figures 3a et 3b. Ce convertisseur utilise effectivement des éléments de résonance LR (inductance) et CR (condensateur) dans les deux circuits possibles d'alimentation de l'enroulement primaire, via le commutateur S1 ou via le commutateur S2 et correspondant aux deux alternances possibles, permettant ainsi d'obtenir à chaque alternance un courant primaire ip débutant en forme d'arche de sinusoïde, le passage à zéro de ce courant (recherché en vue d'une réduction des pertes de commutation) étant ensuite obtenu du fait d'une forme triangulaire de ce courant, elle-même obtenu par mise en conduction de l'une de deux diodes d'écrêtage D1 et D2, quand la tension aux bornes de CR tend respectivement à devenir négative et supérieure à la tension d'alimentation.

Ce type de convertisseur présente cependant des inconvénients. Ainsi les formes de courant obtenues dans les diodes d'écrêtage iD1, iD2, ainsi que dans le condensateur (iCR) ou la source (is), présentent des fronts de commutation abrupts, ce qui provoque des perturbations radioélectriques ou des suroscillations parasites.

La présente invention a pour objectif un convertisseur à découpage permettant d'obtenir une commutation douce de tous les composants du montage.

La présente invention a également pour objet un convertisseur à découpage dans lequel les formes d'ondes sont en arches de sinusoïdes, évitant ainsi des suroscillations parasites, et permettant également un meilleur filtrage du courant secondaire par le filtre de sortie, du fait d'une moins grande richesse en harmoniques.

La présente invention a également pour objectif un convertisseur à découpage dans lequel, pour une fréquence de commutation donnée, la fréquence du courant secondaire peut être multipliée par deux (la fréquence nominale pouvant être égale à la fréquence de résonance), autorisant ainsi une réduction du volume du filtre de sortie.

La présente invention a également pour objectif un convertisseur à découpage à double alternance et à double enroulement primaire dans lequel le nombre de commutateurs est réduit par rapport au montage considéré à la figure 2, passant de quatre à deux.

La présente invention a pour objet un convertisseur continu-continu à découpage, comportant une source de tension continue alimentant une charge via au moins un circuit d'alimentation à découpage d'au moins un enroulement primaire d'un transformateur, essentiellement caractérisé en ce que ce circuit d'alimentation à découpage est un circuit à résonance, un élément étant par ailleurs prévu au secondaire du transformateur, dont la valeur de l'impédance à la fréquence de résonance fR permet de limiter le courant dans ce circuit d'alimentation à découpage à sa seule composante alternative.

D'autres objets et caractéristiques de la présente invention apparaîtront plus clairement à la lecture de la description suivante d'un exemple de réalisation dans laquelle :
- les figures 1a, 1b, 2, 3a et 3b déjà décrites sont des figures relatives à l'art antérieur,
- la figure 4 est un schéma d'un convertisseur suivant l'invention,
- les figures 5a et 5b représentent les formes d'ondes obtenues avec un convertisseur suivant la figure 4.

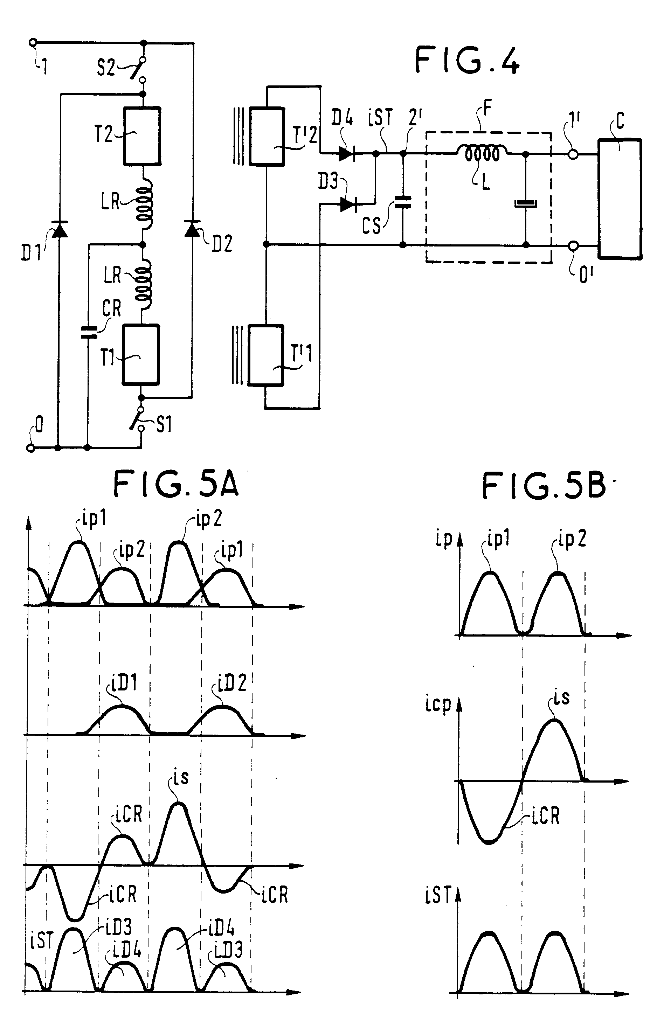

Le convertisseur représenté sur la figure 4 comporte deux transformateurs dont les enroulements primaires sont référencés T1 et T2, et dont les enroulements secondaires respectifs sont référencés T′1 et T′2. Le côté primaire du schéma est alimenté par une source de tension continue appliquée entre deux bornes repérées 1 et 0 ; le côté secondaire du schéma alimente une charge C.

Une première extrémité des deux enroulements primaires est connectée à l'une des bornes, 0 par exemple, de la source de tension continue V10 par l'intermédiaire d'un condensateur CR ; on a par ailleurs référencé par LR la self de fuite de ces deux enroulements supposés identiques.

Une deuxième extrémité de l'enroulement primaire T2 est connectée d'une part à la borne d'entrée 1 par l'intermédiaire d'un commutateur S2, et d'autre part à la borne d'entrée 0 par l'intermédiaire d'une diode d'écrêtage D1.

De même une deuxième extrémité de l'enroulement primaire T1 est connectée à la borne d'entrée 0 par l'intermédiaire d'un commutateur S1, et à la borne d'entrée 1 par l'intermédiaire d'une diode d'écrêtage D2.

Les deux enroulements secondaires T′1 et T′2 ont une première extrémité commune constituant la référence de sortie, référencée 0′, l'autre borne de sortie, référencée 1′, étant obtenue en un point commun 2′ à deux diodes D3 et D4 connectées par ailleurs respectivement à une deuxième extrémité des deux enroulements secondaires.

Un condensateur CS et un filtre intégrateur F sont par ailleurs disposés entre les points 2′ et 0′ et entre les bornes de sortie 1′ et 0′.

Au cours d'une première phase correspondant par exemple à une fermeture du commutateur S1 et à une ouverture du commutateur S2, l'enroulement primaire T1 est alimenté par un circuit dit à résonance comportant le commutateur S1, le condensateur CR et l'inductance LR, le condensateur CR étant supposé préalablement chargé à la tension continue V10.

La fermeture du commutateur S1 entraîne le passage dans ce circuit d'un courant sinusoïdal (du moins pour la première arche à laquelle se limite cette première phase) de fréquence égale à la fréquence de résonance fR déterminée par les éléments LR et CR, ip1 désignant sur la figure 5 le courant primaire au cours de cette première phase, et le courant iST au secondaire étant de même nature.

La fermeture du commutateur S1 entraîne donc un transfert d'énergie au secondaire à travers l'enroulement secondaire T′1, la diode D3 et le condensateur CS. Le courant traversant le commutateur S1 est donc sinusoïdal de fréquence fR. Il s'ensuit une évolution sinusoïdale de la tension aux bornes du condensateur CR. Lorsque cette tension devient négative, la diode D1 conduit, et intervient alors une deuxième phase de résonance à travers l'enroulement primaire T₂, la diode D1, l'inductance LR et le condensateur CR, l'énergie étant à partir de cet instant transférée aussi au secondaire à travers l'enroulement secondaire T′2, la diode DU, et le condensateur CS, ip2 désignant sur la figure 5 le courant primaire correspondant.

On profite ensuite du passage par zéro du courant primaire pour procéder à l'ouverture du commutateur S1.

Au cours d'une deuxième phase correspondant à un état ouvert des deux commutateurs S1 et S2, l'enroulement T2 continue néanmoins à être alimenté par le circuit D1, CR, LR, T2 comme en fin de première phase. Les durées de ces deux phases sont équivalentes.

Le passage par zéro du courant primaire dont il a été question ci-dessus est obtenu grâce au condensateur CS qui se présente comme un court-circuit à la fréquence de résonance, et qui permet donc de ne pas tenir compte de la composante continue de courant dans la charge, ramenée par le transformateur, et de limiter le courant dans le commutateur S1 à sa seule composante alternative.

Le commutateur S2 est ensuite fermé au passage par zéro du courant dans l'enroulement primaire T2, commandant ainsi une troisième phase durant laquelle le commutateur S1 sera maintenu ouvert.

De même que précédemment l'enroulement primaire T2 est tout d'abord alimenté par un premier circuit à résonance composé du commutateur S2, de l'inductance LR et du condensateur CR, le circuit se refermant sur la source de tension continue d'entrée, ip2 désignant sur la figure 5A le courant primaire correspondant.

De même que précédemment lorsque la tension sinusoïdale aux bornes du condensateur CR est suffisamment supérieure à la tention V10 la diode D2 conduit, entraînant simultanément l'alimentation de l'enroulement primaire T1 via un deuxième circuit à résonance composé de la diode D2, de l'inductance LR et du condensateur CR, et se refermant également sur la source de tension continue d'entrée. De même que précédemment, une quatrième phase est ensuite obtenue en ouvrant le commutateur S2 (le commutateur S1 étant toujours à l'état ouvert) phase au cours de laquelle se prolonge l'alimentation de l'enroulement primaire T1 via le deuxième circuit à résonance (courant primaire ip1 sur la figure 5A) le fonctionnement ainsi obtenu permettant ainsi, pour une fréquence de découpage donnée, de "multiplier par deux "la fréquence du courant secondaire, suivant l'importance de l'inductance.

Lorsque l'inductance de fuite LR est négligeable, les diodes D1 et D2 ne conduisent pas et les formes d'ondes sont celles de la figure 5b. Dans ce cas il n'y a pas de récupération sur la charge c'est-à-dire il n'y a pas de deuxième et de quatrième phases. La fréquence du courant secondaire est par ailleurs dans ce cas égale à la fréquence de résonance. En tout état de cause, l'absence de D1 et D2 entraîne des surtensions sur S1 et S2 suivant l'importance de LR.

Le condensateur CR étant, en fin de cette quatrième phase, rechargé à la valeur V10, le circuit est à nouveau prêt pour un nouveau cycle de quatre phases, ces cycles pouvant être espacés pour permettre une régulation du courant débité dans la charge.

Le convertisseur ainsi décrit permet donc d'obtenir une commutation douce de tous les composants réduisant ainsi sensiblement les perturbations "EMI" (Electromagnetic Interférence) et supprimant les perturbations "RFI" (Radiofrequency Interférence) que généreraient les diodes en commutation forcée.

Par ailleurs, l'absence totale de croisement courant tension au blocage permet de ne pas surdimensionner les commutateurs (notamment MOS) en tension. Le faible dv/dt sur les commutateurs au blocage et l'annulation naturelle du courant dans ces commutateurs commandés permet également d'envisager l'usage de "GTO" ("Gate Turn off Switch") ou de thyristors rapides, à des fréquences supérieures à 50 KHZ.

Par ailleurs, avec ce montage, il n'est pas nécessaire d'avoir une diode de roue libre, le condensateur CS fonctionnant comme réservoir d'énergie pour le filtre et la charge.

Par ailleurs, du fait de la disposition en série des commutateurs avec les deux enroulements primaires, il y a une autoprotection totale des commutateurs en cas de court-circuit accidentel au secondaire et aucune précaution supplémentaire ne s'impose au démarrage ou dans les séquences transitoires.

Par ailleurs, le condensateur CS se comportant comme un court-circuit à la fréquence de résonance, la tension de sortie continue varie peu avec la charge, le filtre de sortie etant alimenté par une "source de courant" définie par les éléments de résonance LR, CR, CS et la tension continue d'entrée.

## Revendications

1. Convertisseur continu-continu à découpage, et à transfert direct d'énergie, comportant une source de tension continue (V10) alimentant une charge (C) via au moins un circuit d'alimentation à découpage (S1, T1, LR, CR - S2, T2, LR, CR) d'au moins un enroulement primaire (T1, T2) d'un transformateur, caractérisé en ce que ce circuit d'alimentation à découpage est un circuit à résonance (LR, CR), un élément (CS) étant par ailleurs prévu au secondaire (T′1, T′2) du transformateur, dont la valeur de l'impédance à la fréquence de résonance fR permet de limiter le courant dans ce circuit d'alimentation à découpage à sa seule composante alternative.

2. Convertisseur selon la revendication 1, caractérisé en ce que l'élément prévu au secondaire du transformateur est un condensateur (CS) branché en parallèle sur la charge et se comportant comme un court-circuit à la fréquence de résonance.

3. Convertisseur selon l'une des revendications 1 à 2, caractérisé en ce que les éléments de résonance sont formés par la self de fuite (LR) de l'enroulement primaire du transformateur et par un condensateur (CR).

4. Convertisseur selon la revendication 1, caractérisé en ce qu'il comporte en outre au moins un autre circuit d'alimentation (D1, T2, LR, CR - D2, T1, LR, CR) d'au moins un enroulement primaire du transformateur, cet autre circuit étant dit à déclenchement par un circuit d'alimentation à découpage, et sa conduction étant déclenchée pendant la conduction d'un circuit d'alimentation à découpage par emprunt d'énergie à celui-ci, et poursuivie au delà de l'ouverture de ce dernier, ce circuit d'alimentation à déclenchement par un circuit d'alimentation à découpage étant également un circuit à résonance.

5. Convertisseur selon la revendication 4, caractérisé en ce qu'un circuit d'alimentation (D1, T2, LR, CR - D2, T1, LR, CR) à déclenchement par un circuit d'alimentation à découpage (S1, T1, LR, CR - S2, T2, LR, CR) a même fréquence de résonance que ce dernier.

6. Convertisseur selon l'une des revendications 4 et 5, caractérisé en ce qu'un circuit d'alimentation (D1, T2, LR, CR - D2, T1, LR, CR) à déclenchement par un circuit d'alimentation à découpage (S1, T1, LR, CR - S2, T2, LR, CR) emprunte son énergie à un circuit d'alimentation à découpage par mise en commun d'un élément de résonance (CR).

7. Convertisseur selon la revendication 6, caractérisé en ce que cet élément de résonance (CR) est un condensateur.

8. Convertisseur selon l'une des revendications 4 à 7, caractérisé en ce que le moyen de déclenchement d'un circuit d'alimentation (D1, T2, LR, CR - D2, T1, LR, CR) à déclenchement par un circuit d'alimentation à découpage est une diode d'écrêtage (D1, D2) de la tension aux bornes du moyen de découpage du circuit d'alimentation à découpage.

9. Convertisseur selon l'une des revendications 4 à 8, caractérisé en ce que le transformateur est muni de deux enroulements primaires (T1, T2) alimentés chacun par un circuit d'alimentation à découpage (S1, T1, LR, CR - S2, T2, LR, CR) et par un circuit d'alimentation (D1, T2, LR, CR - D2, T1, LR, CR) à déclenchement par un circuit d'alimentation à découpage, en ce que le transformateur est muni de deux enroulements secondaires correspondants (T′1, T′2), et en ce qu'un circuit d'alimentation à déclenchement par un circuit d'alimentation à découpage relatif à un enroulement primaire a sa conduction déclenchée par la conduction du circuit d'alimentation à découpage relatif à l'autre enroulement primaire, et son ouverture déclenchée par la conduction du circuit d'alimentation à découpage relatif au même enroulement primaire, de sorte qu'une énergie est restituée à la charge (C) au cours de quatre phases successives dont une première correspond à un état ouvert du moyen de découpage (S1-S2) d'un premier circuit d'alimentation à découpage et à un état fermé du moyen de découpage (S1-S2) d'un deuxième circuit d'alimentation à découpage, une deuxième phase correspondant à un état ouvert de ces deux moyens de découpage (S1-S2), une troisième phase correspondant à des états de ces deux moyens de découpage (S1-S2) inversés par rapport à la première phase, et une quatrième phase correspondant à nouveau à un état ouvert de ces deux moyens de découpage (S1-S2).

10. Convertisseur selon la revendication 9, caractérisé en ce que chaque circuit d'alimentation à découpage comporte un seul moyen de découpage (S1-S2).

11. Convertisseur selon la revendication 9, caractérisé en ce que les moyens de découpage (S1-S2) sont disposés en série avec les enroulements primaires (T1-T2).

12. Convertisseur selon les revendications 3 et 9, caractérisé en ce que, lorsque l'élément de résonance (LR) formé par la self de fuite d'un enroulement primaire est suffisamment faible, il n'y a plus que deux phases successives, correspondant à la première et à la troisième phases.

## Claims

1. Direct energy transfer switch mode DC-DC converter including a direct current voltage supply (V10) feeding a load (C) via at least one switch mode circuit (S1, T1, LR, CR - S2, T2, LR, CR) feeding at least one primary winding (T1, T2) of a transformer, characterised in that said switch mode power supply circuit is a resonant circuit (LR, CR), a component (CS) being provided at the secondary (T′1, T′2) of the transformer whose impedance at the resonant frequency fR restricts the current in said switch mode power supply circuit to its alternating current component only.

2. Converter according to claim 1 characterised in that the component provided at the secondary of the transformer is a capacitor (CS) shunting the load and behaving as a short-circuit at the resonant frequency.

3. Converter according to claim 1 or claim 2 characterised in that the resonant circuit components are the leakage inductance (LR) of the primary winding of the transformer and a capacitor (CR).

4. Converter according to claim 1 characterised in that it further includes at least one other circuit (D1, T2, LR, CR - D2, T1, LR, CR) feeding at least one primary winding of the transformer, said other circuit being triggered by a switch mode power supply circuit, and being turned on while a switch mode power supply circuit is conducting by obtaining energy therefrom, and remaining turned on after the latter is turned off, said circuit triggered by a switch mode power supply circuit also being a resonant circuit.

5. Converter according to claim 4 characterised in that a power supply circuit (D1, T2, LR, CR - D2, T1, LR, CR) triggered by a switch mode power supply circuit (S1, T1, LR, CR - S2, T2, LR, CR) has the same resonant frequency as the latter.

6. Converter according to claim 4 or claim 5 characterised in that a power supply circuit (D1, T2, LR, CR - D2, T1, LR, CR) triggered by a switch mode power supply circuit (S1, T1, LR, CR - S2, T2, LR, CR) obtains energy from a switch mode power supply circuit by sharing therewith a resonant component (CR).

7. Converter according to claim 6 characterised in that said resonant component (CR) is a capacitor.

8. Converter according to any one of claims 4 to 7 characterised in that the means for triggering a power supply circuit (D1, T2, LR, CR - D2, T1, LR, CR) triggered by a switch mode power supply circuit is a diode (D1, D2) for peak limiting the voltage across the switching means of the switch mode power supply circuit.

9. Converter according to any one of claims 4 to 8 characterised in that the transformer has two primary windings (T1, T2) each fed by a switch mode power supply circuit (S1, T1, LR, CR - S2, T2, LR, CR) and by a power supply circuit (D1, T2, LR, CR - D2, T1, LR, CR) triggered by a switch mode power supply circuit, in that the transformer has two respective secondary windings (T′1, T′2), and in that a power supply circuit triggered by a switch mode power supply circuit relating to a primary winding is triggered on by conduction in the switch mode power supply circuit relating to the other primary winding and is triggered off by conduction in the switch mode power supply circuit relating to the same primary winding, whereby energy is restored to the load (C) during four successive phases of which a first corresponds to an off state of the switch means (S1-S2) of a first switch mode power supply circuit and an on state of the switch means (S1-S2) of a second switch mode power supply circuit, a second phase corresponds to an off state of said two switch means (S1-S2), a third phase corresponds to states of said two switch means (S1-S2) inverted relative to the first phase, and a fourth phase corresponds to an off state of said two switch means (S1-S2).

10. Converter according to claim 9 characterised in that each switch mode power supply circuit includes a single switch means (S1-S2).

11. Converter according to claim 9 characterised in that the switch means (S1-S2) are in series with the primary windings (T1-T2).

12. Converter according to claims 3 and 9 characterised in that, when the resonant component (LR) constituted by the leakage inductance of a primary winding is sufficiently low valued, there are no more than two successive phases, corresponding to the first and third phases.

## Patentansprüche

1. Gleichstrom-Gleichstrom-Zerhackerwandler zum direkten Energietransfer, der eine Gleichspannungsquelle (V10) enthält, die eine Last (C) über mindestens eine Zerhackerspeiseschaltung (S1, T1, LR, CR S2, T2, LR, CR) mit mindestens einer Primärwicklung (T1, T2) eines Transformators speist, dadurch gekennzeichnet, daß die Zerhackerspeiseschaltung eine Resonanzschaltung (LR, CR) ist, wobei überdies ein Element (CS) in der Sekundärwicklung (T′1, T′2) des Transformators vorgesehen ist, dessen Impedanzwert bei der Resonanzfrequenz fR es ermöglicht, den Strom in der Zerhackerspeiseschaltung auf seine Wechselkomponente alleine zu begrenzen.

2. Wandler nach Anspruch 1, dadurch gekennzeichnet, daß das in der Sekundärwicklung des Transformators vorgesehene Element ein Kondensator (CS) ist, der parallel zur Last geschaltet ist und sich bei der Resonanzfrequenz wie ein Kurzschluß verhält.

3. Wandler nach Anspruch 1 oder 2, dadurch gekennzeichnet, daß die Resonanzelemente aus der Streuinduktivität (LR) der Primärwicklung des Transformators und aus einem Kondensator (CR) bestehen.

4. Wandler nach Anspruch 1, dadurch gekennzeichnet, daß er zusätzlich mindestens eine weitere Speiseschaltung (D1, T2, LR, CR - D2, T1, LR, CR) mit mindestens einer Primärwicklung des Transformators aufweist, wobei diese weitere Schaltung eine Schaltung mit Auslösung durch eine Zerhackerspeiseschaltung ist und durch Energieentnahme leitend wird, während eine Zerhackerspeiseschaltung leitend ist und leitend bleibt und über die Öffnungsdauer dieser Schaltung hinaus, wobei diese durch eine Zerhackerspeiseschaltung leitend gesteuerte Speiseschaltung ebenfalls eine Resonanzschaltung ist.

5. Wandler nach Anspruch 4, dadurch gekennzeichnet, daß eine Speiseschaltung (D1, T2, LR, CR - D2, T1, LR, CR) mit Auslösung durch eine Zerhackerspeiseschaltung (S1, T1, LR, CR - S2, T2, LR, CR) die gleiche Resonanzfrequenz wie die letztgenannte aufweist.

6. Wandler nach Anspruch 4 oder 5, dadurch gekennzeichnet, daß die Speiseschaltung (D1, T2, LR, CR - D2, T1, LR, CR) mit Auslösung durch eine Zerhackerspeiseschaltung (S1, T1, LR, CR - S2, T2, LR, CR) ihre Energie einer Zerhackerspeiseschaltung durch gemeinsame Verwendung eines Resonanzelementes (CR) entnimmt.

7. Wandler nach Anspruch 6, dadurch gekennzeichnet, daß das Resonanzelement (CR) ein Kondensator ist.

8. Wandler nach einem der Ansprüche 4 bis 7, dadurch gekennzeichnet, daß das Mittel zum Auslösen einer Zerhackerspeiseschaltung (D1, T2, LR, CR - D2, T1, LR, CR) durch eine Zerhakkerspeiseschaltung eine Diode (D1, D2) zum Begrenzen der an den Klemmen des Zerhackerschalters der Zerhackerspeiseschaltung liegenden Spannung ist.

9. Wandler nach einem der Ansprüche 4 bis 8, dadurch gekennzeichnet, daß der Transformator mit zwei Primärwicklungen (T1, T2) ausgestattet ist, die je durch eine Zerhackerspeiseschaltung (S1, T1, LR, CR - S2, T2, LR, CR) und durch eine Speiseschaltung (D1, T2, LR, CR - D2, T1, LR, CR) mit Auslösung durch eine Zerhackerspeiseschaltung gespeist werden, daß der Transformator mit zwei entsprechenden Sekundärwicklungen (T′1, T′2) ausgestattet ist und daß eine Speiseschaltung mit Auslösung durch eine Zerhackerspeiseschaltung in Bezug auf eine Primärwicklung ihrem leitenden Zustand durch das Leitendwerden der Zerhackerspeiseschaltung in Bezug auf die andere Primärwicklung erreicht und ihren Sperrzustand durch das Leitendwerden der Zerhackerspeiseschaltung in Bezug auf die gleiche Primärwicklung erreicht, derart, daß ein Energiebetrag an die Last (C) während der vier aufeinanderfolgenden Phasen abgegeben wird, von denen eine erste Phase einem offenen Zustand des Zerhackerschalters (S1-S2) einer ersten Zerhackerspeiseschaltung sowie einem geschlossenen Zustand des Zerhackerschalters (S1-S2) einer zweiten Zerhackerspeiseschaltung entspricht, während eine zweite Phase einer offenen Stellung dieser beiden Zerhackerschalter (S1-S2), eine dritte Phase den im Vergleich zur ersten Phasen inversen Zuständen der beiden Zerhackerschalter (S1-S2) und eine vierte Phase erneut einer offenen Stellung dieser beiden Zerhackerschalter (S1-S2) entspricht.

10. Wandler nach Anspruch 9, dadurch gekennzeichnet, daß jede Zerhackerspeiseschaltung einen einzigen Zerhackerschalter (S1-S2) aufweist.

11. Wandler nach Anspruch 9, dadurch gekennzeichnet, daß die Zerhackerschalter (S1-S2) in Reihe mit den Primärwicklungen (T1-T2) angeordnet sind.

12. Wandler nach den Ansprüchen 3 und 9, dadurch gekennzeichnet, daß, wenn das Resonanzelement (LR), das durch die Streuinduktivität einer Primärwicklung gebildet wird, genügend schwach ist, es nur zwei aufeinanderfolgende Phasen gibt, die der ersten und der dritten Phase entsprechen.
